# EUROPÄISCHE PATENTSCHRIFT

(11) **EP 3 838 693 B1**
(45) Veröffentlichungstag und Bekanntmachung des Hinweises auf die Patenterteilung: **11.05.2022**
(21) Anmeldenummer: 20215441.5
(22) Anmeldetag: 18.12.2020
(51) Int. Cl.: B60T 1/16, B60T 17/22

(54) **BREMSEN VON SCHIENENFAHRZEUGEN MITTELS EINSAUGENS VON LUFT**
BRAKING OF RAILWAY VEHICLES BY MEANS OF AIR SUCTION
FREINAGE DES VÉHICULES FERROVIAIRES AU MOYEN DE L'ASPIRATION DE L'AIR

(30) Priorität: 19.12.2019 DE 102019220271
(43) Veröffentlichungstag der Anmeldung: 23.06.2021
(73) Patentinhaber: Bombardier Transportation GmbH, 10785 Berlin (DE)
(72) Erfinder: Unger-Weber, Frank, 14109 Berlin (DE); Tietze, Andreas, 13595 Berlin (DE)
(74) Vertreter: Patentanwälte Bressel und Partner mbB

(56) Entgegenhaltungen:
- DE-A1- 19 954 190
- DE-A1-102010 039 593
- DE-U- 6 946 383
- RU-C2- 2 649 278

## Beschreibung

Die Erfindung betrifft ein Verfahren zum Betreiben eines Schienenfahrzeugs und ein Schienenfahrzeug, die sich jeweils durch einen vorteilhaften Bremsbetrieb auszeichnen.

Schienenfahrzeuge verfügen in der Regel über eine Mehrzahl unterschiedlicher Bremssysteme. Beispielsweise existiert eine mechanische Bremsanlage, die durch Erzeugen mechanischer Reibkräfte Räder und/oder Achsen des Schienenfahrzeugs abbremst. Die Komponenten einer mechanischen Bremse sind verschleißbehaftet, was zu Wartungs- und Reparaturkosten führt.

Unter einer mechanischen Bremse werden hierin jegliche Reibungsbremsen verstanden, also zum Beispiel auch sogenannte Klotzbremsen, am Rad oder auf den Wellen montierte Scheibenbremsen, Handbremsen oder Magnet-Schienenbremsen.

Auch bekannt sind elektrodynamische Bremsen (oder auch elektrische Bremsen), bei denen Traktionsmotoren in einen generatorischen Betrieb geschaltet werden und mechanische Traktionsenergie (bzw. kinematische Energie der sich drehenden Räder oder einen Teil der kinetischen Energie des Zuges) in elektrische Energie umwandeln. Die elektrodynamischen Bremsen sind zwar in der Regel mindestens genauso leistungsstark wie die erforderliche Traktionsleistung zum Antreiben / Fahren, dennoch ist die elektrodynamische Bremskraft insbesondere im hohen Geschwindigkeitsbereich meist nicht ausreichend. Damit besteht der Bedarf des zusätzlichen Einsatzes von mechanischen Bremssystemen, die (insbesondere im hohen Geschwindigkeitsbereich) verschleißbehaftet sind.

Ferner muss im Fall von fehlender Aufnahmefähigkeit des speisenden Netzes die erzeugte elektrische Energie oftmals in Form von Wärmeenergie (in Bremswiderständen) dissipiert werden, was zu weiteren Nachteilen führt (z.B. Investition für den Bremswiderstand). Die elektrodynamische Bremse kann außerdem, ebenso wie das Antreiben beim Fahren, zu einer Belastung der hierzu verwendeten Komponenten führen (in den meisten Fällen sind dies Stromrichter, Traktionsmotor, Kupplung und/oder Getriebe). Demzufolge tritt auch durch das elektrodynamische Bremsen ein gewisses Kostenrisiko und ein erforderlicher Wartungsaufwand auf.

Prinzipiell sind auch weitere Bremssysteme möglich, z.B. Wirbelstrombremsen oder hydraulische Bremsen, ohne dass die Erfindung auf eine spezifische Variante hiervon eingeschränkt ist. Allerdings weist die Erfindung vorteilhafte Ausführungsformen insbesondere in Zusammenwirkung mit einer mechanischen und/oder elektrodynamischen Bremse auf.

Bekannt ist auch das Verwenden aerodynamischer Störklappen als Bremssystem, die selektiv ausgeklappt werden, um den Luftwiderstand zu erhöhen. Diese Systeme sind jedoch begrenzt effektiv, sind stark geräuschbehaftet und erhöhen die Investitionskosten.

Um die Wartungsanfälligkeit, Wartungsintervalle und Kosten derartiger Bremssysteme zu begrenzen, stehen derzeit nur begrenzte Lösungen zur Verfügung. Beispielsweise können besonders verschleißbeständige Komponenten für die Bremssysteme verwendet werden, was aber mit hohen anfänglichen Investitionskosten einhergeht.

DE 10 2010 039 593 A1 beschreibt ein Schienenfahrzeug mit einer Bremsanlage, die von einer Bremssteuervorrichtung gesteuert ist, wobei die Bremsanlage wenigstens einen mit einem Antrieb versehenen Verdichter aufweist, der zum Ansaugen und Komprimieren von Umgebungsluft ausgebildet und angeordnet ist, wobei der wenigstens eine Verdichter auf Anforderung der Bremssteuervorrichtung Umgebungsluft ansaugt, komprimiert und im Wesentlichen in Fahrtrichtung des Schienenfahrzeugs zur Erzielung einer Bremswirkung ausbläst.

DE199 54 190 A1 betrifft ein Verfahren und eine Vorrichtung zur Erzeugung von Kälte aus beim Abbremsen von Fahrzeugen aus kinetischer Energie gewonnener elektrischer Energie.

Es besteht somit ein Bedarf dafür, das Bremsen eines Schienenfahrzeugs insbesondere hinsichtlich Lebenszykluskosten, Wartungsanfälligkeit und Zuverlässigkeit zu verbessern.

Diese Aufgabe wird durch die Gegenstände der beigefügten unabhängigen Ansprüche gelöst. Vorteilhafte Weiterbildungen finden sich in den beigefügten abhängigen Ansprüchen. Sofern nicht anders angegeben oder ersichtlich, können sämtliche der vorstehenden Bemerkungen auch auf die vorliegende Erfindung zutreffen bzw. bei dieser vorgesehen sein.

Die Erfinder haben erkannt, dass neben den geschilderten bekannten Bremssystemen ein bisher ungenutztes Bremspotential bei Schienenfahrzeugen besteht. Hierbei handelt es sich um eine Erhöhung des Fahrwiderstandes durch Einsaugen von Umgebungsluft, wodurch eine widerstandsbedingte Bremskraft erzeugbar ist.

Prinzipiell ist das physikalische Phänomen bekannt, dass bei einem Einsaugen von Luft aus der Umgebung ein Fahrwiderstand erzeugt wird (sh. z.B. entsprechende Widerstandsgröße in der sogenannten Davis-Formel zum Berechnen des Fahrwiderstands von Schienenfahrzeugen). Dies resultiert aus dem Erfordernis, die ruhende oder nur vergleichsweise langsam strömende Umgebungsluft auf Fahrzeuggeschwindigkeit zu beschleunigen. Je höher der eingesaugte (Luft-) Massenstrom und je höher die Differenz zwischen Schienenfahrzeuggeschwindigkeit und Geschwindigkeit der Umgebungsluft, desto höher der erzeugte Fahrwiderstand.

Bisher wird dieses Phänomen als ein von Schienenfahrzeugen zu überwindender Fahrwiderstandsanteil im Fahrbetrieb berücksichtigt, beispielsweise um eine erforderliche Traktionsleistung zu bestimmen oder das Fahrzeug für einen gewünschten Fahrbetrieb auszulegen. Beispielsweise wird bei der Auslegung von einer im Normalbetrieb oftmals konstanten durchschnittlich erforderlichen Lufteinsaugung ausgegangen, zum Beispiel um den Einfluss von Klimaanlagen und/oder der Lüftung/Kühlung von Komponenten der Traktionskette (bspw. von Umrichtern, Traktionsmotoren, Haupttransformatoren, etc.) als zu überwindenden Fahrwiderstand zu berücksichtigen.

Es wurde bisher aber nicht erkannt, dass sich hierdurch auch ein Potential zum aktiven und gezielten Abbremsen des Fahrzeugs über die eigentliche (Haupt-) Funktion der Lufteinsaugung hinaus ergibt (zum Beispiel unabhängig von dem Betrieb einer Klimaanlage und Komponenten der Traktionskette). Anders ausgedrückt wurde erfindungsgemäß erkannt, dass die Lufteinsaugung als eine zusätzliche Stellgröße genutzt werden kann, um eine Fahrzeugbremsung durchzuführen oder zumindest zu erleichtern.

Entsprechend wird erfindungsgemäß vorgeschlagen, den von einer lufteinsaugenden Vorrichtung eingesaugten Luftstrom nach Maßgabe davon zu aktivieren und/oder zu erhöhen, ob ein Bremsbetrieb vorliegt oder nicht. Soll also das Fahrzeug verlangsamt werden, kann ein aus der Umgebung eingesaugter Luftstrom selektiv erzeugt oder verstärkt werden, um den Fahrwiderstand gezielt zu erhöhen. Hierdurch wird das Fahrzeug verlangsamt, ohne dass anderweitige Bremssysteme zugeschaltet oder aber im Vergleich zu einem Bremsbetrieb ohne eine derartige Lufteinsaugung, nur in einem geringeren Ausmaß aktiviert werden müssen.

Da somit eine zusätzliche Möglichkeit zum Erzeugen von Bremskräften bereitgestellt wird, kann insbesondere eine mechanische Bremse in entsprechend verringertem Ausmaß betrieben werden, sodass deren Verschleißerscheinungen begrenzt werden können. Dies geht mit Vorteilen hinsichtlich Kosten und Wartungshäufigkeit einher. Allgemein können also die Belastungen der mechanischen Bremse (insbesondere bei hohen Geschwindigkeiten) durch Ausnutzen des zusätzlichen aerodynamischen Bremspotentials reduziert werden. Da bei geringerer Belastung auch preiswertere mechanische Bremssysteme verwendet werden können, ergeben sich entsprechende Möglichkeiten zur Kostenreduktion.

Durch das neu ergänzte Bremssystem in Form einer Lufteinsaugung bzw. einer lufteinsaugenden Vorrichtung, die im Bremsbetrieb in vorstehend geschilderten Weise aktiviert und/oder betrieben wird, wird zudem ein verschleißarmes Bremssystem ergänzt, das in den meisten Schienenfahrzeugen bereits vorhanden ist (aber bisher eben nicht als ein Bremssystem genutzt wird). Somit kann ohne Erhöhung der Investitionskosten ein zusätzliches Bremssystem für Schienenfahrzeuge bereitgestellt werden.

Weiter ist das Verfahren dahingehend vorteilhaft, als dass die Erzeugung und/oder Einstellung eines Luftstroms weitestgehend fahrerautonom erfolgen kann und präzise steuerbar ist. Folglich können Bremskräfte in definierter und präzise zu regelnder Weise erzeugt werden. Wie nachstehend noch erläutert, kann beispielsweise durch Ändern einer elektrischen Energiezufuhr die lufteinsaugende Vorrichtung zum Erzeugen eines gewünschten Luftstroms (und somit einer gewünschten Bremskraft) präzise angesteuert werden.

Ferner ist die erfindungsgemäß zusätzliche erzeugte aerodynamische Bremskraft reibwertunabhängig. Sie ist folglich unabhängig von ggf. vorhandenen physikalischen oder normative Reibwert-Grenzwerten. Eine Abhängigkeit von Umgebungsbedingungen kann aber unter Umständen hinsichtlich der Umgebungstemperatur und/oder Luftdichte vorliegen. Diese Parameter können aber erfindungsgemäß z.B. gemessen und berücksichtigt werden, um die Bremskraft zuverlässig einzustellen. Entsprechende Messungen sind zu Reibungsverhältnissen nicht möglich.

Hervorzuheben ist, dass die erfindungsgemäße Erzeugung von Bremskräften auch ohne signifikante Auswirkungen auf den Betrieb anderweitiger Komponenten des Schienenfahrzeugs umsetzbar ist. Dies betrifft insbesondere Komponenten, die von lufteinsaugenden Vorrichtungen versorgt und insbesondere gekühlt werden. Derartige Komponenten besitzen in der Regel ein ausreichend großes thermisches Speichervermögen, sodass sie sowohl beim Reduzieren des eingesaugten Luftvolumens als auch bei dessen Erhöhung keine signifikanten und/oder zumindest keine besonders schnellen Temperaturänderungen erfahren.

Im Detail wird ein Verfahren zum Betreiben eines Schienenfahrzeugs (z.B. in Form eines Zugs, eines Verbunds aus mehreren Einzel-Schienenfahrzeugen, eines Triebwagens oder einer Lokomotive) vorgeschlagen, wobei das Schienenfahrzeug wenigstens eine lufteinsaugende Vorrichtung (Lufteinsaugvorrichtung) umfasst, die dazu eingerichtet ist, einen Luftstrom durch Einsaugen von Umgebungsluft zu erzeugen, wobei das Verfahren aufweist:
- Variieren (oder, mit anderen Worten, Einstellen, Erzeugen oder Festlegen) des erzeugten Luftstroms in Abhängigkeit von einem Bremsbetrieb oder Fahrbetrieb des Schienenfahrzeugs.

Mit anderen Worten kann der erzeugte Luftstrom in Abhängigkeit davon erzeugt werden, ob ein Bremsbetrieb vorliegt oder ob ein Fahrbetrieb vorliegt.

In einem Fahrbetrieb weist das Schienenfahrzeug vorzugsweise eine positive Beschleunigung auf oder eine Beschleunigung von null, aber eine Geschwindigkeit mit einem von 0 km/h verschiedenen Wert. Im Bremsbetrieb weist das Schienenfahrzeug hingegen vorzugsweise eine negative Beschleunigung auf und/oder befindet sich wenigstens ein Bremssystem der hierin geschilderten Art in einem aktiven (d.h. bremskrafterzeugenden) Zustand. Vorzugsweise weist die Geschwindigkeit auch im Bremsbetrieb zumindest anfänglich einen von 0 km/h verschiedenen Wert auf.

Die Lösung unterscheidet sich von bisherigen Luftstromerzeugungen bei Schienenfahrzeugen dahingehend, als dass eine Stärke des angesaugten Luftstroms nicht allein in Abhängigkeit von gewünschten Betriebszuständen und/oder Betriebsparametern der lufteinsaugenden Vorrichtung festgelegt wird. Anders ausgedrückt steht also (zumindest im Bremsbetrieb) nicht eine unabhängig von einem Bremsbetrieb zu erfüllende Funktion der lufteinsaugenden Vorrichtung sowie deren hierfür erforderlichen Betriebszustände und/oder Betriebsparameter im Vordergrund (zum Beispiel die Klimatisierungsfunktion einer Klimaanlage). Stattdessen erfolgt die Erzeugung bzw. das Einstellens des Volumens des eingesaugten Luftstroms maßgeblich oder ausschließlich in Abhängigkeit davon, dass ein Bremsbetrieb vorliegt und/oder aktiviert wird und vorzugsweise auch in Abhängigkeit davon, welche Bremskräfte benötigt werden. Zusammengefasst kann der Luftstrom maßgeblich mit der Zielsetzung erzeugt und eingesaugt werden, eine gewünschte Bremskraft und/oder allgemein eine signifikante Fahrwiderstandserhöhung (und somit Bremskraft) bereitzustellen. Gemäß den Patentansprüchen fällt der Luftstrom im Bremsbetrieb höher aus als im Fahrbetrieb. Bei dem Luftstrom kann es sich um einen Volumenstrom handeln (z.B. in Kubikmeter pro Sekunde) oder um einen Massenstrom (Volumenstrom multipliziert mit Luftdichte). Wenn hierin von einer Erhöhung oder Reduzierung des Luftstroms gesprochen wird (oder aber einer Höhe oder Stärke des Luftstroms), kann hierunter auch eine Erhöhung oder Reduzierung (bzw. eine Höhe oder Stärke) des entsprechenden Massenstroms und/oder Volumenstroms verstanden werden.

Dadurch, dass der Luftstrom im Bremsbetrieb gegenüber dem Fahrbetrieb erhöht wird, tritt die gewünschte Erhöhung des Fahrwiderstands und somit das Erzeugen einer in der Regel zu anderen Bremssystemen zusätzlichen Bremskraft ein. Dabei kann vorgesehen sein, dass im Fahrbetrieb im Durchschnitt ein geringerer Luftstrom vorliegt, der sich aus der im Fahrbetrieb benötigten Lüftung / Kühlung ergibt, als der im Bremsbetrieb durchschnittlich vorliegende Luftstrom, der sich aus der höheren Lüftung / Kühlung im Bremsbetrieb ergibt. Das Verhältnis des Luftstromes für die Lüftung/Kühlung im Fahrbetrieb zum Luftstrom im Bremsbetrieb kann sich nach dem zeitlichen Verhältnis der beiden Betriebszustände richten.

Insbesondere kann im Fahrbetrieb ein um wenigstens 20 % oder 50 % niedrigerer Luftstrom vorgesehen sein, d. h. der Luftstrom kann im Bremsbetrieb entsprechend um wenigstens 20 % oder 50 % erhöht werden.

Allgemein kann der Luftstrom im Bremsbetrieb in Abhängigkeit einer gewünschten Bremskraft und/oder der Bremskraft von wenigstens einem anderen Bremssystem und/oder einer aktuellen Fahrzeuggeschwindigkeit festgelegt werden. Je höher die gewünschte Bremskraft, desto höher kann der Luftstrom ausfallen. Je höher die bereits von anderen (insbesondere der elektrodynamischen Bremse) Bremssystemen erzeugten Bremskräfte, desto geringer kann der Luftstrom ausfallen. Je höher die Fahrzeuggeschwindigkeit, desto höher kann wiederum der Luftstrom gewählt werden, um eine ausreichende Bremskraft zu erzeugen. Auch eine zur Verfügung stehende Bremsstrecke kann berücksichtigt werden (je kürzer, desto höher der erzeugte Luftstrom).

Der Verschleiß der mechanischen Bremse hängt maßgeblich von der aktuellen und kumulierten Bremsleistung ab. Diese ist linear von Bremskraft und FahrzeugGeschwindigkeit abhängig. Bei hohen Geschwindigkeiten ist beim Bremsen und bei der mechanischen Bremse der thermische Energieeintrag in der Regel am höchsten. Hier lässt sich aber auch der größte Beitrag durch eine Erhöhung des angesaugten Luftvolumens erreichen, sodass diese dort bevorzugt zum Einsatz kommt. Unter hohen Geschwindigkeiten können hierin allgemein Geschwindigkeiten von mehr als 60 km/h verstanden werden.

Die Variation der Lufteinsaugung kann regelbasiert und/oder per Algorithmus erfolgen. Allgemein kann das Ausmaß dieser Variation in Abhängigkeit davon festgelegt werden (und können die erwähnten Regeln und der Algorithmus entsprechend definiert sein), inwieweit Instandhaltungskosten durch das aerodynamische Bremsen reduzierbar sind, verglichen mit den Kosten der für die erhöhte Lufteinsaugung zusätzlich benötigten elektrischen Energie.

Zum Erhöhen des Luftstroms kann die lufteinsaugende Vorrichtung entsprechend betrieben werden (z.B. durch Erhöhen von dessen elektrischer Energiezufuhr, um eine erhöhte Einsaugkraft und/oder Lüfterdrehzahl erzeugen zu können). Allgemein kann die Lufteinsaugvorrichtung stufenlos betreibbar sein oder aber definierte Leistungsstufen aufweisen (zum Beispiel durch die Anwendung von polumschaltbaren Lüftermotoren, Betrieb von mehreren separat schaltbaren Lüftergruppen, etc.). Insbesondere kann die Leistungselektronik der Lufteinsaugvorrichtung einen Frequenzumrichter umfassen, damit die Lüftermotoren der Lufteinsaugvorrichtung frequenzvariabel mit verschiedenen Spannungsniveaus und Frequenzen versorgbar und somit in verschiedenen Betriebspunkten betreibbar ist.

Ein von der Lufteinsaugvorrichtung erzeugter Luftstrom kann also bevorzugt stufenlos oder aber gemäß einer Vielzahl von Stufen einstellbar und/oder steuerbar sein, insbesondere wenn eine frequenzabhängige Ansteuerung mittels Frequenzumrichter erfolgt.

Wenn das Schienenfahrzeug eine Mehrzahl von lufteinsaugenden Vorrichtungen umfasst (wie allgemein bevorzugt), kann allgemein ein kumulierter eingesaugter Luftstrom betrachtet werden. Jegliche hierin erfolgende Bezugnahme auf einen Luftstrom kann analog für einen kumulierten Luftstrom gelten, sofern nicht anders angegeben oder ersichtlich.

Der kumulierte Luftstrom kann dadurch erhöht werden, dass einige der lufteinsaugenden Vorrichtungen (bzw. wenigstens eine) im Bremsbetrieb mit einer erhöhten Einsaugkraft betrieben werden. Zusätzlich oder alternativ kann vorgesehen sein, die Anzahl von einem Luftstrom einsaugenden Vorrichtungen zu erhöhen (d.h. diese selektiv zuzuschalten). Soll eine maximale Bremskraft bereitgestellt werden, können sämtliche verfügbaren lufteinsaugenden Vorrichtungen aktiviert werden und/oder mit maximaler Einsaugkraft betrieben werden.

Wie nachstehend noch erläutert, kann es sich bei der lufteinsaugenden Vorrichtung insbesondere um einen Lüfter, einen Kompressor oder eine Klimaanlage (Kälteanlage) handeln. In vorstehend erläuterter Weise können diese derart elektrisch angesteuert werden, dass sie variable Betriebs- bzw. Arbeitspunkte aufweisen. Soll also die Einsaugkraft einer entsprechenden Vorrichtung erhöht werden (d.h. der eingesaugte Luftstrom höher ausfallen), kann der Betriebs- bzw. Arbeitspunkt geeignet angepasst werden.

Allgemein versteht es sich, dass sämtliche hierin geschilderten Maßnahmen und Schritte zur Erhöhung eines Luftstroms bei einem Wechsel vom Bremsbetrieb zurück in den Fahrbetrieb in umgekehrter Weise ausführbar sind. Dann können z.B. lufteinsaugende Vorrichtungen abgeschaltet und/oder in der Weise betrieben werden, dass ihre Einsaugkraft abnimmt.

Gemäß den Patentansprüchen wird ferner im Bremsbetrieb wenigstens ein (anderweitiges) Bremssystem des Schienenfahrzeugs aktiviert wird und der (eingesaugte) Luftstrom nach Maßgabe einer (bereitgestellten, vorgegebenen und/oder erzeugten) Bremskraft dieses Bremssystems erzeugt.

Bei dem Bremssystem kann es sich um jegliches hierin geschilderte Bremssystem und insbesondere eine mechanische Bremse oder eine elektrodynamische Bremse handeln. Es ist an sich bekannt, dass bereitgestellte Bremskräfte dieser Bremssysteme vorgebbar und/oder steuerbar sind und dass Informationen über hiervon aktuell erzeugte oder vorgegebene Bremskräfte z.B. in Steuergeräten des Schienenfahrzeugs verfügbar sind. Soll über das Erzeugen eines Einsaug-Luftstroms eine zusätzliche Bremskraft bereitgestellt werden, kann sich dies daran orientieren, welche Bremskräfte bereits durch das wenigstens ein weiteres Bremssystem erzeugt werden (sollen). Fallen letztere hoch aus, kann nur ein entsprechend geringer zusätzlicher Luftstrom erzeugt werden bzw. dieser gegenüber dem Fahrbetrieb nur geringfügig erhöht werden. Sind die bereits erzeugten/vorgegebenen Bremskräfte hingegen gering, kann ein entsprechend stärker ausgeprägter Luftstrom erzeugt werden.

Allgemein sind verschiedene Möglichkeiten zum Zusammenwirken der Bremskräfte der unterschiedlichen Bremssysteme des Schienenfahrzeugs möglich.

Beispielsweise können die Bremskräfte von wenigstens einem weiteren Bremssystem und insbesondere einem mechanischen Bremssystem auch in Abhängigkeit davon gewählt werden, welcher eingesaugte Luftstrom aktuell erzeugt werden kann und/oder inwieweit ein bereits erzeugter Luftstrom im Bremsbetrieb noch weiter erhöht werden kann. Anders ausgedrückt kann also das verfügbare Bremspotential durch Erzeugen von eingesaugten Luftströmen ermittelt und darauf basierend dann die Bremskraft von wenigstens einem weiteren Bremssystem des Schienenfahrzeugs festgelegt werden. Dies bietet das Potential dafür, dass insbesondere mechanische Bremskräfte stets in einem möglichst großen Ausmaß reduziert bzw. durch Bremskräfte aufgrund der Luftstromeinsaugung ersetzt werden können.

Sind bereits vergleichsweise viele lufteinsaugende Vorrichtungen in Betrieb und/oder erzeugen bereits in großem Umfang Einsaug-Luftströme, können beim Wechsel in einen Bremsbetrieb nur begrenzt zusätzliche Bremskräfte basierend auf Luftstrom-Einsaugungen bereitgestellt werden. In diesem Fall müssen anderweitige Bremssysteme des Schienenfahrzeugs höhere Bremskräfte erzeugen. Sind hingegen wenige lufteinsaugende Vorrichtungen in Betrieb und/oder auf einem lediglich geringen Niveau, ist das Potential zum Erzeugen zusätzlicher Bremskräfte aufgrund von Luftstrom-Einsaugungen und somit das Potential zum Reduzieren der Bremskräfte von anderweitigen Bremssystemen entsprechend hoch.

Allgemein darauf hinzuweisen ist, dass die lufteinsaugenden Vorrichtungen in der Regel eine spezifische Aufgabe erfüllen bzw. Funktion bereitstellen, z.B. eine Kühlfunktion. Das Ausmaß der bereitgestellten oder bereitzustellenden Funktion ist typischerweise abhängig von den Verlusten des jeweiligen zu kühlenden Systems/Komponenten und der Temperatur der angesaugten Luft. Um den Effekt der Verringerung des Fahrwiderstandes durch Einsaugen von Luft zu reduzieren, werden die lufteinsaugenden Vorrichtungen beim Fahrbetrieb bevorzugt mit einem geringst vertretbaren eingesaugten Luftvolumen betrieben, bei der der eine Funktionserfüllung noch möglich ist. Unterstützt wird dies durch die thermische Zeitkonstante der zu kühlenden Komponenten. Im Bremsbetrieb wird das Luftvolumen dann aber vorteilhafterweise ohne Berücksichtigung der im Fahrbetrieb bereitzustellenden Funktion bzw. ohne Berücksichtigung eines für diese Funktion erforderlichen (Mindest-) Volumens erhöht.

Zusammengefasst kann eine insgesamt bereitzustellende Bremskraft ermittelt werden. Dies kann in an sich bekannter Weise auf Basis einer gewünschten oder z.B. durch ein Zugbeeinflussungssystem vorgegebene Geschwindigkeitsreduzierung erfolgen. Anschließend kann optional überprüft werden, welche Bremssysteme in der aktuellen Bremssituation verfügbar bzw. aktivierbar sind. Es kann festgelegt werden, dass die Summe der Bremskräfte der verfügbaren Bremssysteme die zu erzeugende Bremskraft ergeben soll. Es kann überprüft werden, welche Bremskraft maximal durch Luftstrom-Einsaugung (bzw. Erhöhung dieser Einsaugung) erzeugt werden kann und die Bremskräfte der anderweitigen Bremssysteme können darauf basierend gewählt werden, z.B. um die insgesamt bereitzustellende Bremskraft zu erzielen. Dabei kann darauf geachtet werden, die Bremskräfte eines mechanischen Bremssystems so gering wie möglich zu wählen.

Andererseits kann gemäß nachstehender Ausführungsform auch berücksichtigt werden, dass zum Erzeugen der Bremskräfte mittels Luftstrom-Einsaugung in der Regel ein erhöhter elektrischer Energiebedarf zum Erzeugen der erforderlichen Saugkräfte besteht. Dieser kann durch Aktivieren einer elektrodynamischen Bremse zumindest anteilig gedeckt werden. Folglich können also elektrodynamisch erzeugte Bremskräfte in Abhängigkeit davon festgelegt werden, welcher Energiebedarf zum Bereitstellen eines (dann bevorzugten maximalen und ferner bevorzugt kumulierten) eingesaugten Luftstroms benötigt werden.

Auch dies führt vorteilhafterweise dazu, dass aufgrund der vorzugsweise hohen und ferner vorzugsweise maximalen Bremskräfte aufgrund der Luftstrom-Einsaugung auch die elektrodynamischen Bremskräfte vergleichsweise hoch und gegebenenfalls maximal ausfallen. Noch erforderliche mechanische Bremskräfte können dann signifikant reduziert werden.

Zusammengefasst sieht eine weitere Ausführungsform vor, dass im Bremsbetrieb eine elektrodynamische Bremse aktiviert wird, deren Bremskraft zumindest anteilig in Abhängigkeit von einem Energiebedarf der (wenigstens einen) lufteinsaugenden Vorrichtung zum Erzeugen eines vorgegebenen Luftstroms gewählt wird. Dabei kann der Luftstrom, wie geschildert, derart vorgegeben werden, dass maximal mögliche Bremskräfte aufgrund der Luftstrom-Einsaugung bereitstellbar sind.

Allgemein kann eine mechanischen und/oder elektrodynamische Gesamt-Bremskraft zum Erzielen einer gewünschten Geschwindigkeitsreduzierung durch den Fahrer oder eine automatische Zugsicherung vorgegeben werden. Diese kann dann aber fahrerautonom und z.B. per Fahrerassistenzsystem in Anbetracht des erfindungsgemäßen zusätzlichen Bremspotentials angepasst und insbesondere reduziert werden.

Ein allgemeiner Aspekt von Schienenfahrzeug und Verfahren sieht also vor, (zumindest im Bremsbetrieb) den Energiebedarf zum Erzeugen der eingesaugten Luftströme zumindest teilweise durch Aktivieren einer elektrodynamischen Bremse zu decken. Es wurde erkannt, dass insbesondere bei hohen Geschwindigkeiten die elektrodynamische Bremsleistung sehr hoch ist und der vergleichsweise geringe Leistungsbedarf der Lüfter oder anderweitigen Vorrichtungen zum Erhöhen der eingesaugten Luftstroms zuverlässig zu decken ist.

Gemäß einer Weiterbildung kann auch vorgesehen sein, dass dann, wenn beim elektrodynamischen Bremsen ein Energieüberschuss erzeugt wird (d. h. mehr elektrische Energie erzeugt als aktuell benötigt wird) die lufteinsaugenden Vorrichtungen zum zumindest teilweisen Dissipieren dieser Energie verwendet werden. Insbesondere kann dann deren bezogene Leistung erhöht werden und/oder allgemein ein erzeugter Luftstrom. Aufgrund einer damit einhergehenden temporär erhöhten Kühlwirkung, können die Vorrichtungen im Anschluss an die Bremsphase dann bevorzugt mit einer geringeren Leistung laufen bzw. eine geringere Leistung aus einer fahrzeugexternen Stromversorgung abgreifen. Anders ausgedrückt kann dies in einem Minderbedarf an Hilfsbetriebeleistung jeweils nach Beendigung der Bremsphase resultieren (z.B. im Stillstand oder beim Wiederanfahren).

Gemäß einem weiteren Aspekt ist die lufteinsaugende Vorrichtung, wenn sie in einem Fahrbetrieb inaktiv war, bei einem Wechsel vom Fahrbetrieb in den Bremsbetrieb aktivierbar. Anders ausgedrückt kann also eine im Fahrbetrieb inaktive lufteinsaugende Vorrichtung beim Wechsel in den Bremsbetrieb gezielt eingeschaltet und/oder zugeschaltet werden.

Wie hierin noch ausgeführt, können die lufteinsaugenden Vorrichtungen sogenannte Hilfsbetriebe des Fahrzeugs sein. Diese können in bekannter Weise nicht unmittelbar zum Erzeugen einer Traktionskraft dienen, sondern anderweitige Fahrzeugfunktionen bereitstellen und/oder die Traktionskrafterzeugung lediglich mittelbar unterstützen (z.B. durch Kühlung von Traktionsmotoren, Traktions-Stromrichtern, Haupttransformatoren, etc.). Weitere Beispiele von Hilfsbetrieben, die Luft von außen einsaugen, sind z.B. die Versorgung der Passagiere mit Frischluft, die Kühlung von Hilfsbetriebeumrichtern und Batterieladegeräten sowie eine Klimaanlage oder ein Kompressor zum Erzeugen von Druckluft. Erfindungsgemäß kann wenigstens ein zunächst inaktiver Hilfsbetrieb (oder allgemein wenigstens eine lufteinsaugende Vorrichtung) also selektiv dann aktiviert werden, wenn in den Bremsbetrieb gewechselt wird. Dies kann unabhängig davon erfolgen, ob eine eigentliche Hauptfunktion des Hilfsbetriebs (z.B. Kühlen, Drucklufterzeugung etc.) aktuell benötigt wird oder nicht.

Eine solche Einschaltbedingung für Hilfsbetriebe und/oder lufteinsaugende Vorrichtungen ist aus dem Stand der Technik nicht bekannt. Hierdurch kann in der geschilderten Weise insbesondere ein kumulierter eingesaugter Luftstrom des Schienenfahrzeugs zum gezielten Vergrößern des Fahrwiderstandes im Bremsbetrieb erhöht werden.

Zusammengefasst kann es sich bei der lufteinsaugenden Vorrichtung um einen Hilfsbetrieb und/oder um eine handeln von:
- einen Lüfter, z.B. zur Kühlung von Traktionsmotoren, Haupttransformator(en) oder einer Leistungselektronik für die Traktion oder für andere Bereiche oder Funktionen des Schienenfahrzeugs, z.B. für Hilfsbetriebe;
- einer Klimaanlage (insbesondere einer Split-Anlage und/oder einer Anlage mit separaten und über einen Wärmestauscher verbundenen Luftströmen);
- einen Kompressor (zur Drucklufterzeugung);
- Lüfter für einen Traktionstransformator oder für andere (elektro-) magnetische Komponenten, wie z.B. Drosseln.

Bei einer Weiterbildung des Verfahrens und des Schienenfahrzeugs werden zum Erzeugen des Luftstroms vom Bremsbetrieb bzw. von den zu erzeugenden Bremskräften unabhängige Nebenbedingungen berücksichtigt. Die einzuhaltenden Nebenbedingungen können dazu führen, dass nicht sämtliche lufteinsaugende Vorrichtungen (bei einer etwaigen Mehrzahl entsprechender Vorrichtungen) aktivierbar sind und/oder der eingesaugte Luftstrom von wenigstens einer entsprechenden Vorrichtung nicht beliebig erhöht werden kann. Anders ausgedrückt können die Nebenbedingungen die Verfügbarkeit der Bremskrafterzeugung mittels Luftstromeinsaugung zumindest mittelbar definieren und/oder beschränken.

Insbesondere kann es sich bei den Nebenbedingungen um einzuhaltende Geräuschemissionen des Schienenfahrzeugs handeln, beispielsweise wenn dieses sich in einem Bahnhof oder einem Wohngebiet befindet. Allgemein können also die Nebenbedingungen ortsabhängig sein und kann das Erzeugen des eingesaugten Luftstroms im Bremsbetrieb ortsabhängigen Beschränkungen unterliegen. Zusätzlich oder alternativ kann eine Geschwindigkeitsabhängigkeit vorliegen (d.h. von der Geschwindigkeit des Schienenfahrzeugs), da die Geräuschemissionen abhängig vom einsaugbaren Luftvolumen sind, welches wiederum von der Relativgeschwindigkeit zur Umgebung abhängt.

Eine Weiterbildung des Verfahrens und des Schienenfahrzeugs sieht vor, dass der Luftstrom unterhalb eines Grenzwerts (z.B. für den erzeugten Massen- oder Volumenstrom) erzeugt wird, ab dessen Überschreitung inakzeptable Geräuschemissionen vorliegen (d.h. maximal zulässige Geräuschemissionen vorliegen und/oder überschritten werden). Als weitere Nebenbedingungen können ein maximal zulässiger elektrischer Energieverbrauch insbesondere für wenigstens eine lufteinsaugende Vorrichtung, einzuhaltenden Temperaturwerte der lufteinsaugenden Vorrichtung oder eine maximal zulässige Auswirkung des erhöhten Luftstroms auf die lufteinsaugende Vorrichtung betrachtet werden.

Hinsichtlich des letztgenannten Beispiels ist zu berücksichtigen, dass die lufteinsaugenden Vorrichtungen erfindungsgemäß bevorzugt nicht nur oder zumindest nicht primär zum Bereitstellen eines zusätzlichen Bremssystems des Schienenfahrzeugs vorgesehen werden. Stattdessen handelt es sich hierbei bevorzugt um bereits vorhandene oder ohnehin einzubauende Vorrichtungen, die primär anderweitige Funktionen erfüllen können (z.B. vorgenannte Hilfsbetriebe). Insbesondere kann der eingesaugte Luftstrom zumindest im Fahrbetrieb dazu erzeugt werden, damit die entsprechende Vorrichtung eine eigentliche Primärfunktion und/oder primäre Arbeit bereitstellt bzw. verrichtet, welche vorzugsweise unabhängig von Bremskrafterzeugungen sind. Dies betrifft z.B. das Erzeugen einer Kühlwirkung bei einer Klimaanlage, das Erzeugen von Druckluft bei einem Kompressor oder das Erzeugen eines gewünschten Luftstroms bei einem Lüfter.

Im Fahrbetrieb kann der Betrieb der lufteinsaugenden Vorrichtungen maßgeblich hinsichtlich bzw. zum Bereitstellen einer (bremswirkungsunabhängigen) Primärfunktion erfolgen, insbesondere ohne, dass gezielt Bremskräfte erzeugt werden. Im Bremsbetrieb kann der Betrieb der lufteinsaugenden Vorrichtungen maßgeblich hinsichtlich bzw. zum Bereitstellen einer Bremsfunktion bzw. zum Erzeugen gewünschter Bremskräfte erfolgen, insbesondere unabhängig von der im Fahrbetrieb gewünschten Primärfunktion.

Wie nachstehend noch insbesondere in Bezug auf eine Klimaanlage erläutert, könnte ein beliebiges Erhöhen des eingesaugten Luftstroms im Bremsbetrieb aber dazu führen, dass die lufteinsaugende Vorrichtung ihre eigentliche Arbeit bzw. Funktion entsprechend stärker ausgeprägt verrichtet bzw. bereitstellt, ohne dass dies gewünscht ist. Beispielsweise könnte dies dazu führen, dass eine Temperatur in einem von einer Klimaanlage gekühlten Raum (z.B. Wagon) unzulässig abfällt, ein Druckluftreservoir übermäßig stark mit Druckluft befüllt wird oder aber Fahrzeugkomponenten durch Lüfter in unerwünscht starker Weise gekühlt werden.

Folglich können Nebenbedingungen definiert werden, die vorzugsweise situationsabhängig eine maximal zulässige Arbeitsverrichtung und/oder Funktionsbereitstellung der lufteinsaugenden Vorrichtung und somit auch den hiervon erzeugbaren Luftstrom begrenzen (z.B. eine maximal zulässige Temperatur, auf die eine lufteinsaugende Vorrichtung in Form einer Klimaanlage einen hiervon versorgten Raum (z.B. einen Wagon) herunterkühlen darf). Wird die Nebenbedingung überschritten, kann die Vorrichtung deaktiviert oder der erzeugte Luftstrom reduziert werden.

Auf diese Weise wird vermieden, dass sich das Verwenden der lufteinsaugenden Vorrichtung auch als ein Bremssystem nachteilig auf dessen eigentliche Funktion und/oder das Schienenfahrzeug im Allgemeinen auswirkt.

Beispielsweise sieht eine Weiterbildung des Verfahrens und des Schienenfahrzeugs vor, dass der (erzeugte) Luftstrom entlang einer wärmetauschenden Komponente (z.B. einem Wärmetauscher) der lufteinsaugenden Vorrichtung geleitet wird, wobei im Bremsbetrieb ein Wärmeaustausch zwischen der Komponente und dem Luftstrom begrenzt wird (z.B. auf einen zulässigen Maximalwert). Auf diese Weise kann vermieden werden, dass der Wärmeaustausch in einem solchen Ausmaß stattfindet, dass eine eigentlich unerwünschte Kühlung und/oder Erwärmung aufgrund einer Nutzung der lufteinsaugenden Vorrichtung als Bremssystem auftritt.

Diese Weiterbildung ist insbesondere für Klimaanlagen relevant, bei denen ein in der Regel kälterer Kühlluftstrom aus der Umgebung erzeugt bzw. eingesaugt wird und über einen kühlmittelführenden Wärmetauscher (also eine wärmetauschende Komponente) geführt wird. Würde man in diesem Fall den eingesaugten Luftstrom beliebig erhöhen, würde das Kühlmittel unter Umständen unerwünscht stark gekühlt werden. Dies kann sich negativ auf eine Temperatur in einem von der Klimaanlage versorgten Bereich auswirken und/oder kann dazu führen, dass anderweitige Komponenten der Klimaanlage gegen diesen unerwünschten Kühlmittel-Temperaturabfall anarbeiten müssen. In der Regel werden Klimaanlagen in einem engen Temperaturband betrieben und insbesondere geregelt, sodass rasch abfallende Kühlmitteltemperaturen entsprechend starke Gegenreaktionen von anderweitigen Systemen der Klimaanlage hervorrufen könnten (beispielsweise von einem Kompressor).

Diesem Risiko wird dadurch vorgebeugt, dass der entsprechende Wärmeaustausch begrenzt wird, also trotz erhöhtem eingesaugtem Luftstrom der Wärmeaustausch und insbesondere die Kühlmitteltemperatur zulässige Grenzen nicht verletzen (z.B. eine zulässige Kühlmittel-Mindesttemperatur nicht unterschritten wird).

Insbesondere kann in diesem Zusammenhang vorgesehen sein, dass zum Begrenzen des Wärmeaustauschs ein Kühlmitteldurchsatz durch die wärmeaustauschende Komponente reduziert wird (z.B. bis auf null reduziert wird). Dies kann beispielsweise durch Reduzieren einer Strömungsgeschwindigkeit des Kühlmittels durch die Komponente (z.B. durch Leistungsreduzierung eines Kühlmittelkompressors) oder durch Öffnen eines Bypassventils stromaufwärts der Komponente erfolgen. Im letzteren Fall kann das Kühlmittel anteilig oder vollständig einen anderen Strömungsweg durch die Vorrichtung (insbesondere Klimaanlage) nehmen, anstatt durch die Komponente geleitet zu werden, und kann somit in geringerem Ausmaß einem Wärmeaustausch mit dem Luftstrom ausgesetzt werden. Die vorstehenden Beispiele stellen zuverlässige Möglichkeiten bereit, um den Wärmeaustausch trotz erhöhtem Luftstrom zu begrenzen.

Die Erfindung betrifft auch ein Schienenfahrzeug, mit
- wenigstens einer lufteinsaugenden Vorrichtung, die dazu eingerichtet ist, einen Luftstrom durch Einsaugen von Umgebungsluft zu erzeugen, und
- einer (z.B. digitalen und/oder elektronisch betreibbaren) Steuereinrichtung (z.B. in Form eines Computers, mit wenigstens einer Prozessoreinrichtung und/oder digitalen Speichereinrichtung);
- wobei die Steuereinrichtung dazu eingerichtet ist, die lufteinsaugende Vorrichtung derart anzusteuern, dass der erzeugte Luftstrom in Abhängigkeit von einem Bremsbetrieb oder Fahrbetrieb des Schienenfahrzeugs variierbar ist.

Allgemein kann das Schienenfahrzeug jegliche weiteren Merkmale, Varianten oder Aspekte umfassen, um sämtliche hierin geschilderten Verfahrensschritte, Verfahrensmaßnahmen, Betriebszustände oder Effekte bereitzustellen. Insbesondere können sämtliche Ausführungen zu und Weiterbildungen von Verfahrensmerkmalen auch bei den gleichlautenden Schienenfahrzeugmerkmalen vorgesehen sein bzw. auf diese zutreffen. Insbesondere kann das Schienenfahrzeug ein Verfahren gemäß sämtlichen hierin geschilderten Varianten ausführen, beispielsweise indem die Steuereinrichtung die lufteinsaugende Vorrichtung hierzu geeignet ansteuert.

Beispielsweise kann die Steuereinrichtung die lufteinsaugende Vorrichtung derart ansteuern, dass deren elektrische Energieversorgung und/oder erzeugte Saugkraft betriebszustandsabhängig variiert wird. Beispielsweise kann die Steuereinrichtung eine frequenzabhängige Ansteuerung von z.B. einem Lüfter der lufteinsaugenden Vorrichtung oder einer anderweitigen Saugkraft erzeugende Einheit vornehmen. Insbesondere kann die Steuereinrichtung die lufteinsaugende Vorrichtung derart ansteuern, dass der Luftstrom im Bremsbetrieb gegenüber dem Fahrbetrieb erhöht wird.

Die Erfindung wird im Folgenden anhand der beigefügten schematischen Figuren erläutert. Dabei können gleichartige oder gleichwirkende Merkmale figurenübergreifend mit den gleichen Bezugszeichen versehen sein.
- Fig. 1: zeigt ein Schienenfahrzeug gemäß einem Ausführungsbeispiel der Erfindung, das ein Verfahren gemäß einem Ausführungsbeispiel der Erfindung ausführt.
- Fig. 2: zeigt ein Ablaufschema des vom Schienenfahrzeug aus Fig. 1 ausgeführten Verfahrens.
- Fig. 3: zeigt eine schematische Detailansicht einer lufteinsaugenden Vorrichtung des Schienenfahrzeugs aus Fig. 1.

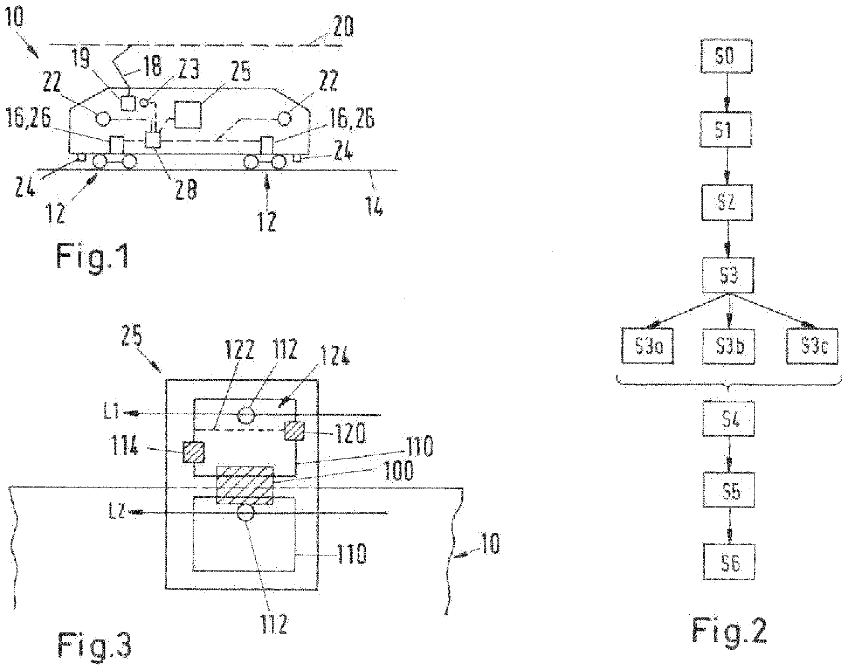

In Fig. 1 ist ein Schienenfahrzeug 10 gemäß einem Ausführungsbeispiel der Erfindung gezeigt. Lediglich beispielhaft handelt es sich hierbei um eine einzelne Lokomotive. Es könnte sich aber ebenso um einen Zug oder um einen Verbund handeln, der eine Mehrzahl von Einzel-Schienenfahrzeugen umfasst, und/oder um einen Triebwagen.

Das Schienenfahrzeug 10 verkehrt auf einer Schienenstrecke 14. Es weist zwei über schematisch angedeutete Traktionsmotoren 16 angetriebene Radsatzgruppen 12 (bzw. Drehgestelle) auf. Im gezeigten Fall wird das Schienenfahrzeug 10 elektrisch angetrieben und greift hierfür mittels eines Stromabnehmers 18 elektrische Energie aus einer angedeuteten Oberleitung 20 ab. Diese Energie wird einem Haupttransformator 19 zugeführt, der die elektrischen Verbraucher des Schienenfahrzeugs 10 zumindest mittelbar speist.

Beispielsweise wird die elektrische Energie in an sich bekannter Weise zum Antreiben der Traktionsmotoren 16 verwendet und somit in kinetische Energie umgewandelt. Bei einem elektrodynamischen Bremsen wird die kinetische Energie in elektrische Energie umgewandelt.

Das Schienenfahrzeug 10 umfasst eine Mehrzahl von lufteinsaugenden Vorrichtungen. Hierbei handelt es sich um schematisch angedeutete Lüfter 22 zum Belüften und somit Kühlen der Traktionsmotoren 16. Ebenso ist eine lufteinsaugende Vorrichtung in Form einer Klimaanlage 25 bereitgestellt. Ferner gezeigt ist ein Lüfter 23 für den Haupttransformator 19. Es können aber auch andere lufteinsaugende Vorrichtungen der im allgemeinen Teil diskutierten Art vorgesehen sein.

Sämtliche der lufteinsaugenden Vorrichtungen 23, 22, 25 stellen Hilfsbetriebe des Schienenfahrzeugs 10 dar und sind dazu eingerichtet, Luft aus der Umgebung einzusaugen und auf diese Weise einen (in das Schienenfahrzeug 10 einströmenden und/oder dieses zumindest abschnittsweise durchströmenden) Luftstrom zu erzeugen.

Das Schienenfahrzeug 10 weist auch eine Mehrzahl von Bremssystemen auf. Hierbei handelt es sich um schematisch angedeutete mechanische Bremsen 24, die auf die Radsätze 12 einwirken und, genauer gesagt, unter Erzeugung von Reibungskräften mit den dortigen Rädern wechselwirken. Als weiteres Bremssystem sind elektrodynamische Bremsen 26 bereitgestellt. In an sich bekannter Weise werden die Traktionsmotoren 16 für den elektrodynamischen Bremsbetrieb generatorisch betrieben. Die elektrischen Bremsen 26 entsprechen also den derart betriebenen Traktionsmotoren 16. Eine Steuereinrichtung 28 (z.B. in Form von einer oder mehreren Rechnereinheiten) ist mit sämtlichen der lufteinsaugenden Vorrichtungen 23, 22, 25 signalübertragend verbunden, im gezeigten Fall aber auch mit den Bremssystemen 24, 26.

Die Steuereinrichtung 28 kann ein- oder mehrteilig ausgebildet sein, z.B. als ein Verbund aus mehreren räumlich getrennten Steuergeräten. Die Steuereinrichtung 28 (oder deren Steuergeräte) können primär anderweitige Funktionen bereitstellen und z.B. den Betrieb von Hilfsbetrieben des Schienenfahrzeugs 10 steuern. Folglich können sie die hierin geschilderten Funktionalitäten der Steuereinrichtung 28 sozusagen lediglich mit übernehmen oder als integrierte (z.B. sekundäre) Funktion ausführen.

Anders ausgedrückt kann unter der Steuereinrichtung 28 auch eine Funktionalität verstanden werden, die auf einer oder mehreren Rechnereinheiten und/oder Steuergeräten installiert bzw. die als eine verteilte Funktionalität realisiert ist. Sofern mehrere verteilte Rechnereinheiten vorgesehen sind, kommunizieren diese vorzugsweise miteinander. Beispielsweise kann für eine Mehrzahl von lufteinsaugenden Vorrichtungen 23, 25, 22 und/oder Bremssystemen 24, 26 (oder aber auch für jede einzelne der Vorrichtungen 23, 22, 25 oder Bremssysteme 24, 26) eine eigene Rechnereinheit vorgesehen sein.

Die Steuereinrichtung / Funktionalität 28 ist dazu eingerichtet, einen von den lufteinsaugenden Vorrichtungen 23, 22, 25 erzeugten Luftstrom einzustellen. Hierzu kann sie eine elektrische Energieversorgung und insbesondere einen Frequenzumrichter dieser Vorrichtungen 23, 25, 22 steuern, und zwar in der Weise, dass der Luftstrom variiert wird (insbesondere dessen Stärke und/oder Höhe). Im Fall der Lüfter 23, 22 kann ein Elektromotor zur Variation der Lüfterdrehzahl entsprechend angesteuert werden. Im Fall der Klimaanlage 25 kann ein in der Regel dort ebenfalls vorhandener Lüfter zum Einsaugen von Umgebungsluft in analoger Weise angesteuert werden (also zum Variieren der Lüfterdrehzahl).

Die Steuereinrichtung 28 ist optional auch dazu eingerichtet, die Bremssysteme 24, 26 zu aktivieren. Insbesondere ist sie dazu eingerichtet, diese zum Einstellen einer gewünschten bzw. vorgegebenen Bremskraft einzustellen.

Diese Bremskräfte können derart gewählt sein, dass eine gewünschte, zu erzielende Bremskraft des Schienenfahrzeugs 10 erreicht wird. Die Höhe dieser gewünschten bzw. zu erzielenden Bremskraft kann sich z.B. aus einer gewünschten Geschwindigkeitsänderung und/oder -änderungsrate und/oder einem zur Verfügung stehenden Bremsweg ergeben. Diese Informationen können von einem nicht dargestellten Zugbeeinflussungssystem erhalten werden oder auf Basis manueller Ein- und/oder Vorgaben.

Weiter ist die Steuereinrichtung 28 dazu eingerichtet, auch die lufteinsaugenden Vorrichtungen 23, 22, 25 zum Bereitstellen eines Fahrwiderstandes im Bremsbetrieb und somit zum Erzeugen von Bremskräften anzusteuern. Hierfür können in bestimmten Betriebssituationen nach Maßgabe einer insgesamt zu erzielenden Bremskraft die eingesaugten Luftströme dieser Vorrichtungen 23, 22, 25 variiert und insbesondere erhöht werden.

Insbesondere kann die Steuereinrichtung 28 ein Signal erhalten, dass ein Bremsbetrieb aktiviert werden soll (wiederum z.B. vom einem Zugbeeinflussungssystem oder aber auf Basis einer gewünschten Geschwindigkeitsreduzierung). Die Steuereinrichtung 28 kann dann ermitteln, welche kumulierte Bremskraft zum Abbremsen des Schienenfahrzeugs 10 bereitzustellen ist. Das Fahrzeug 10 kann dann bspw. regelbasiert ermitteln, welche der Bremssysteme 24, 26 und auch welche der lufteinsaugenden Vorrichtungen 23, 22, 25 aktiviert und/oder in welchem Ausmaß betrieben werden sollen.

Im vorliegenden Beispiel wird bevorzugt, dass der Fahrwiderstand durch die verschleißarm betreibbaren lufteinsaugenden Vorrichtungen 23, 22, 25 möglichst hoch ausfallen soll. Hierzu werden unter optionaler Einhaltung von im allgemeinen Beschreibungssteil geschilderten Nebenbedingungen (und insbesondere ohne, dass zulässige Geräuschemissionen überschritten werden) sämtliche lufteinsaugenden Vorrichtungen 23, 22, 25 beim Wechseln in den Bremsbetrieb aktiviert, falls diese vorher ausgeschaltet waren.

Dies erfolgt ferner bevorzugt in der Weise, dass der erzeugte Luftstrom einer jeden Vorrichtung 23, 22, 25 maximal ausfällt, also in einem größtmöglichen Ausmaß erzeugt wird. Wie geschildert, können hierfür z.B. Drehzahlen von Lüftern dieser Vorrichtungen 23, 22, 25 einen Maximalwert annehmen.

Auch in diesem Zusammenhang können vorrichtungsspezifische Nebenbedingungen berücksichtigt werden. Dies betrifft insbesondere die Klimaanlage 25 und den vorstehend geschilderten Fall, dass ein Wärmeaustausch von z.B. einem Kühlmittel der Klimaanlage 25 mit dem eingesaugten Luftstrom nicht beliebig hoch ausfallen soll. Hierdurch kann ein übermäßig großes Absinken der Kühlmitteltemperatur unter einen Mindestwert vermieden werden.

Die Steuereinrichtung 28 kann in diesem Zusammenhang bevorzugt vorab ermitteln, welche Bremskräfte durch entsprechendes Ansteuern der lufteinsaugenden Vorrichtungen 23, 22, 25 bereitstellbar sind. Aus der Differenz dieser bereitstellbaren Bremskräfte und der gewünschten bzw. vorgegebenen Bremskraft kann diejenige Bremskraft bestimmt werden, die noch von den mechanischen Bremsen 24 und den elektrodynamischen Bremsen 26 bereitzustellen ist.

Vorzugsweise werden die Bremskräfte dieser Bremssysteme 24, 26 derart gewählt, dass die mechanischen Bremskräfte, die mit starken Verschleißerscheinungen einhergehen, möglichst gering und dafür die elektrodynamischen Bremskräfte vergleichsweise hoch ausfallen. Letzteres ist auch dahingehend vorteilhaft, als dass zum Erzeugen maximaler eingesaugter Luftströme ein erhöhter elektrischer Energiebedarf besteht, der durch die elektrodynamischen Bremsen 26 gedeckt werden kann.

Als ein allgemeiner und von den Details der Figurenbeschreibung unabhängiger Aspekt der Erfindung kann somit auch vorgesehen sein, zumindest im Bremsbetrieb den Energiebedarf zum Erzeugen der eingesaugten Luftströme zumindest teilweise und vorzugsweise gänzlich durch Aktivieren einer elektrodynamischen Bremsen 26 zu decken. Beispielsweise kann ein von einer elektrodynamischen Bremse 26 erzeugter Strom einer entsprechenden lufteinsaugenden Vorrichtung 23, 22, 25 zugeführt werden.

Soll hingegen zurück in den Fahrbetrieb gewechselt werden (also eine Beendigung des Bremsbetriebs unter Rücknahme sämtlicher Bremskräfte erfolgen), kann die Steuereinrichtung 28 sämtliche Bremssysteme 24, 26 deaktivieren. Gleichzeitig kann sie die lufteinsaugenden Vorrichtungen 23, 22, 25 wieder wie vor dem Wechsel in den Bremsbetrieb betreiben und/oder derart ansteuern, dass ein hiervon erzeugter Luftstrom sich jeweils verringert.

In Fig. 2 ist ein Ablaufschema eines erfindungsgemäßen Verfahrens gezeigt. Bezugnehmend auf Fig. 1 kann dies z.B. durch die dortige Steuereinrichtung 28 umgesetzt werden.

In einem optionalen Schritt S0 wird im Fahrbetrieb (vorzugsweise fortlaufend und/oder regelmäßig) der Luftvolumen-Bedarf aller Komponenten, die zur Erhöhung des Fahrwiderstandes durch außenseitige Lufteinsaugung beitragen, ermittelt. Bei diesen Komponenten kann es sich zum Beispiel um die lufteinsaugenden Vorrichtungen 23, 22, 25 oder um hiervon mit einem Luftstrom versorgte Komponenten handeln. Zusätzlich wird abhängig von den Neben- und Randbedingungen (z.B. Temperaturen, Ort, Zeitreserve/Fahrplansituation und/oder Fahrzeuggeschwindigkeit) ermittelt, inwiefern eine Reduzierung des Volumenstroms für einzelne lufteinsaugenden Vorrichtungen 23, 22, 25 möglich ist und welchen Effekt dies auf den Fahrwiderstand haben. Ist eine Reduzierung möglich und liegt ein hierdurch erzielbarer Effekt über einem Mindestgrenzwert, kann diese Reduzierung vorgenommen werden, um den Fahrwiderstand zu begrenzen.

In einem Schritt S1 wird ermittelt, dass aus einem Fahrbetrieb in einen Bremsbetrieb gewechselt werden soll.

In einem Schritt S2, der allgemein optional ist, wird eine insgesamt bereitzustellende Bremskraft zum Abbremsen des Schienenfahrzeugs 10 z.B. auf eine gewünschte Zielgeschwindigkeit und/oder innerhalb einer gewünschten Bremsstrecke ermittelt.

In einem Schritt S3, der ebenfalls optional ist, wird basierend auf der Ermittlung in Schritt S2 ermittelt, welche der verfügbaren Bremskrafterzeugungsmöglichkeiten in welchem Ausmaß genutzt werden soll.

Genauer gesagt wird in einem ebenfalls optionalen Schritt S3a ermittelt, welche Bremskräfte die lufteinsaugenden Vorrichtungen 23, 22, 25 insbesondere unter Einhalten hierin geschilderter Nebenbedingungen zur Verfügung stellen können. In einem (wiederum optionalen) Schritt S3b wird darauf basierend ermittelt, welche Bremskräfte die elektrodynamischen Bremsen 26 des Schienenfahrzeugs 10 maximal bereitstellen können. Dies erfolgt vorzugsweise unter Berücksichtigung der Tatsache, dass ein Anteil der erzeugten elektrischen Energie dieser elektrodynamischen Bremsen 26 zur Erzeugung der Luftstrom-Bremskräfte zum Betreiben der lufteinsaugenden Vorrichtung 23, 22, 25 benötigt wird. Dieser Anteil hängt von den im Schritt S3a ermittelten maximalen bereitstellbaren Lufteinsaugungs-Bremskräften ab.

In einem Schritt S3c wird der noch verbleibende Anteil an den vorgegebenen bzw. gewünschten Gesamt-Bremskräften ermittelt, der durch die mechanischen Bremsen 24 bereitgestellt werden soll. Auch dieser Schritt ist prinzipiell optional.

In einem Schritt S4 werden daraufhin die lufteinsaugenden Vorrichtungen 23, 25, 22 (bzw. zumindest ausgewählte hiervon) aktiviert und/oder derart betrieben, dass sich deren erzeugter Luftstrom gegenüber dem vormals vorliegenden Fahrbetrieb erhöht. Anders ausgedrückt werden diese also angesteuert, um einen größeren Luftmassenstrom einzusaugen.

In einem Schritt S5, der auch gleichzeitig oder vor dem Schritt S4 ausführbar ist, werden die weiteren Bremssysteme 24, 26 aktiviert. Das Fahrzeug 10 wird daraufhin auf eine gewünschte Geschwindigkeit abgebremst.

Wird in einem Schritt S6 ermittelt, dass diese Geschwindigkeit erreicht ist, wird daraufhin der Bremsbetrieb beendet. Es kann dann in einen Haltebetrieb (mit einer Geschwindigkeit von 0 km/h) oder in einen Fahrbetrieb (mit einer von 0 km/h verschiedenen Geschwindigkeit) gewechselt werden. In beiden Fällen können die Bremssysteme 24, 26 deaktiviert werden und/oder kann der eingesaugte Luftstrom der Vorrichtungen 23, 22, 25 reduziert werden oder auch gänzlich entfallen.

In Fig. 3 ist eine schematische Detailansicht der Klimaanlage 25 aus Fig. 1 gezeigt. Diese ist in an sich bekannter Weise nach Art einer Split-Klimaanlage aufgebaut und umfasst zwei getrennte Kühlmittelkreisläufe 110. Einer davon (in Fig. 3 der obere) ist der Umgebung zugewandt, während der andere (in Fig. 3 der untere) sich in einem Innenraum des Schienenfahrzeugs 10 befindet. Über einen Wärmetauscher 100 kann ein Wärmeaustausch zwischen den Kühlmittelkreisläufen 110 stattfinden.

Die gezeigte Mehrzahl von Kühlmittelkreisläufen 110 ist nur beispielhaft. Es reicht auch lediglich ein Kühlmittelkreislauf aus, der sozusagen mit beiden Seiten wechselwirkt bzw. sich durch das innere und äußere des Schienenfahrzeugs 10 erstreckt. Im Bereich des Luftstroms L2 kann dieser singuläre Kühlmittelkreislauf zum Beispiel Wärme aufnehmen und kann diese an den Luftstrom L1 weitergeben. Hierzu kann auch ein Kondensator im Bereich des Luftstrom L1 durchlaufen werden.

Die Kühlmittelkreisläufe 110 führen in an sich bekannter Weise jeweils ein Kühlmittel, z.B. innerhalb mehrfach gebogener Rohrleitungen. Weiter befindet sich in der Nähe von jedem Kühlmittelkreislauf 110 jeweils ein Klimaanlagenlüfter 112, der dazu eingerichtet ist, einen Luftstrom L1, L2 durch bzw. entlang eines Abschnitts der Kühlmittelkreisläufe 110 zu erzeugen. Im Fall des nach außen gerichteten Kühlmittelkreislaufes 110 handelt es ich hierbei um den eingesaugten Luftstrom L1 aus der Umgebung, der im gezeigten Beispiel nach Wechselwirken mit dem Kühlmittelkreislauf 110 wieder (zumindest teilweise) in die Umgebung zurückströmt. Beim unteren Kühlmittelkreislauf 110 wird hingegen Luft aus dem Innenraum eingesaugt und der entsprechende Luftstrom L2 mit einer reduzierten Temperatur wieder in den Innenraum abgegeben.

Bei dem Luftstrom L1 handelt es sich somit um den im Bremsbetrieb selektiv erhöhbaren Luftstrom L1 der hierin geschilderten lufteinsaugenden Vorrichtungen 23, 25, 22. Soll im Bremsbetrieb dieser Luftstrom L1 zum Erzielen einer Bremskraft aber entsprechend hoch ausfallen, würde dies bei einem unveränderten Betrieb der Klimaanlage 25 dazu führen, dass der obere Kühlmittelkreislauf 110 aus Fig. 3 bzw. das darin geführte Kühlmittel sich in einem erhöhten Ausmaß abkühlt. Wie erwähnt, ist dieser Kühlmittelkreislauf 110 aber wärmeleitend mit einer wärmetauschenden Komponente 110 (einem Wärmetauscher) verbunden, über den ein Wärmeaustausch mit dem (in der Regel wärmeren) Kühlmittelkreislauf 110 im Innenraum des Schienenfahrzeugs 10 erfolgt. Folglich würde in der geschilderten Situation auch die Temperatur im Innenraum des Schienenfahrzeugs 10 unerwünscht stark abfallen.

Um dieses Risiko zu begrenzen, kann der Kühlmitteldurchsatz (d.h. die Fließgeschwindigkeit) z.B. durch Herunterfahren der Leistung eines Kompressors 114 zumindest im äußeren Kühlmittelkreislauf 110 begrenzt werden. Zusätzlich oder alternativ kann ein Bypassventil 120 geöffnet werden, sodass das Kühlmittel zumindest anteilig durch eine Bypassleitung 122 verläuft und somit in einem oberen Teilkreis 124 des Kühlmittelkreislaufs 110 zirkuliert. Auf diese Weise wird ebenfalls der Kühlmitteldurchsatz durch den Wärmetauscher 100 reduziert.

## Patentansprüche

1. Verfahren zum Betreiben eines Schienenfahrzeugs (10), das wenigstens eine lufteinsaugende Vorrichtung (23, 22, 25) umfasst, die dazu eingerichtet ist, einen Luftstrom (L1) durch Einsaugen von Umgebungsluft zu erzeugen,
wobei das Verfahren aufweist:
- Variieren des erzeugten Luftstroms (L1) in Abhängigkeit von einem Bremsbetrieb des Schienenfahrzeugs (10).
wobei der Luftstrom (L1) im Bremsbetrieb höher ausfällt als im Fahrbetrieb und
wobei im Bremsbetrieb wenigstens eine von einer mechanischen Bremse und einer elektrodynamischen Bremse aktiviert wird und der Luftstrom (L1) nach Maßgabe einer Bremskraft dieser Bremse(n) erzeugt wird.

2. Verfahren nach Anspruch 1,
wobei im Bremsbetrieb eine elektrodynamische Bremse (26) aktiviert wird, deren Bremskraft zumindest anteilig in Abhängigkeit von einem Energiebedarf der lufteinsaugenden Vorrichtung (23, 22, 25) zum Erzeugen eines vorgegebenen Luftstroms (L1) gewählt wird.

3. Verfahren nach einem der vorangehenden Ansprüche,
mit, wenn die lufteinsaugende Vorrichtung (23, 22, 25) in einem Fahrbetrieb inaktiv war:
- Aktivieren der lufteinsaugenden Vorrichtung (23, 22, 25) bei einem Wechsel vom Fahrbetrieb in den Bremsbetrieb.

4. Verfahren nach einem der vorangehenden Ansprüche,
wobei die lufteinsaugende Vorrichtung (23, 22, 25) eine ist von:
- einem Lüfter (23, 22), zum Beispiel zur Kühlung von Traktionsmotoren (16) oder einer Leistungselektronik;
- einer Klimaanlage (25);
- einem Kompressor.

5. Verfahren nach einem der vorangehenden Ansprüche,
wobei der Luftstrom (L1) unterhalb eines insbesondere orts- und/oder geschwindigkeitsabhängigen Grenzwerts erzeugt wird, ab dessen Überschreitung inakzeptable Geräuschemissionen vorliegen.

6. Verfahren nach einem der vorangehenden Ansprüche,
wobei der Luftstrom (L1) entlang einer wärmetauschenden Komponente (100) der Vorrichtung geleitet wird und im Bremsbetrieb ein Wärmeaustausch zwischen der Komponente (100) und dem Luftstrom (L1) begrenzt wird.

7. Verfahren nach Anspruch 6,
wobei zum Reduzieren des Wärmeaustauschs ein Kühlmitteldurchsatz durch die Komponente (100) reduziert wird, insbesondere durch Reduzieren einer Strömungsgeschwindigkeit des Kühlmittels durch die Komponente (100) oder Öffnen eines Bypassventils (102) stromaufwärts von der Komponente (100).

8. Verfahren nach einem der vorangehenden Ansprüche,
wobei die lufteinsaugende Vorrichtung (23, 22, 25) eingerichtet ist, eine von einer Bremskrafterzeugung im Bremsbetrieb unabhängige Primärfunktion bereitzustellen.

9. Verfahren nach Anspruch 8,
wobei der erzeugbare eingesaugte Luftstrom der lufteinsaugenden Vorrichtung (23, 22, 25) unter Berücksichtigung möglicher nachteiliger Auswirkungen auf die eigentliche Primärfunktion begrenzbar ist.

10. Verfahren nach einem der vorangehenden Ansprüche,
wobei die lufteinsaugende Vorrichtung (23, 22, 25) eingerichtet ist, einen im Fahrbetrieb eingesaugten Luftstrom im Bremsbetrieb zu verstärken.

11. Verfahren nach einem der vorangehenden Ansprüche,
wobei die lufteinsaugende Vorrichtung (23, 22, 25) zum Erzeugen des Luftstroms angesteuert wird.

12. Verfahren nach Anspruch 2,
wobei dann, wenn durch das elektrodynamische Bremsen ein Energieüberschuss erzeugt wird, diese Energie zumindest teilweise mittels der lufteinsaugenden Vorrichtung (23, 22, 25) dissipiert wird.

13. Schienenfahrzeug (10), mit:
- wenigstens einer lufteinsaugenden Vorrichtung (23, 22, 25), die dazu eingerichtet ist, einen Luftstrom (L1) durch Einsaugen von Umgebungsluft zu erzeugen; und
- einer Steuereinrichtung (28);
wobei die Steuereinrichtung (28) dazu eingerichtet ist, die lufteinsaugende Vorrichtung (23, 22, 25) derart anzusteuern, dass der erzeugte Luftstrom (L1) in Abhängigkeit von einem Bremsbetrieb des Schienenfahrzeugs (10) variierbar ist,
wobei der Luftstrom (L1) im Bremsbetrieb höher ausfällt als im Fahrbetrieb und wobei im Bremsbetrieb wenigstens eine von einer mechanischen Bremse und einer elektrodynamischen Bremse aktiviert wird und der Luftstrom (L1) nach Maßgabe einer Bremskraft dieser Bremse(n) erzeugt wird.

## Claims

1. A method for operating a rail vehicle (10), comprising at least one air suction device (23, 22, 25) that is configured to generate an air flow (L1) by sucking in ambient air,
the method comprising:
- varying the generated air flow (L1) depending on a braking operation of the rail vehicle (10),
the air flow (L1) being higher during braking operation than during driving operation, and during braking operation, at least one of a mechanical brake and an electrodynamic brake being activated, and the air flow (L1) being generated according to a braking force of this brake or these brakes.

2. The method according to claim 1,
wherein, during braking operation, an electrodynamic brake (26) is activated, the braking force of which is selected at least partly depending on an energy demand of the air suction device (23, 22, 25) for generating a predefined air flow (L1).

3. The method according to any one of the preceding claims,
comprising, when the air suction device (23, 22, 25) was inactive during a driving operation:
- activating the air suction device (23, 22, 25) during a change from the driving operation into the braking operation.

4. The method according to any one of the preceding claims,
wherein the air suction device (23, 22, 25) is one of the following:
- a fan (23, 22), for example for cooling traction motors (16) or a power electronic;
- an air conditioning (25);
- a compressor.

5. The method according to any one of the preceding claims,
wherein the air flow (L1) is generated below an in particular location-dependent and/or speed-dependent limit value, which, when exceeded, causes inacceptable noise emissions to arise.

6. The method according to any one of the preceding claims,
wherein the air flow (L1) is conducted along a heat exchanging component (100) of the device and, during braking operation, a heat exchange between the component (100) and the air flow (L1) is limited.

7. The method according to claim 6,
wherein, so as to reduce the heat exchange, a coolant throughput through the component (100) is reduced, in particular by reducing a flow rate of the coolant through the component (100) or opening a bypass valve (102) upstream from the component (100).

8. The method according to any one of the preceding claims,
wherein the air suction device (23, 22, 25) is configured to provide a primary function that is independent of a braking force generation during the braking operation.

9. The method according to claim 8,
wherein the sucked-in air flow of the air suction device (23, 22, 25) that can be generated can be limited to the actual primary function, taking potential disadvantageous effects into consideration.

10. The method according to any one of the preceding claims,
wherein the air suction device (23, 22, 25) is configured to enhance during braking operation a sucked-in air flow that is sucked in during driving operation,.

11. The method according to any one of the preceding claims,
wherein the air suction device (23, 22, 25) is controlled for generating the airflow.

12. The method according to claim 2,
wherein, when excess energy is generated as a result of the electrodynamic braking, this energy is at least partially dissipated by means of the air suction device (23, 22, 25).

13. A rail vehicle (10), comprising:
- at least one air suction device (23, 22, 25) that is configured to generate an air flow (L1) by sucking in ambient air; and
- a control unit (28),
the control unit (28) being configured to control the air suction device (23, 22, 25) in such a way that the generated air flow (L1) can be varied depending on a braking operation of the rail vehicle (10),
the air flow (L1) being higher during braking operation than during driving operation, and during braking operation, at least one of a mechanical brake and an electrodynamic brake being activated, and the air flow (L1) being generated according to a braking force of this brake or these brakes.

## Revendications

1. Procédé d'exploitation d'un véhicule ferroviaire (10) qui comprend au moins un dispositif d'aspiration d'air (23, 22, 25) qui est aménagé pour produire un flux d'air (L1) par aspiration de l'air ambiant,
le procédé présentant l'étape consistant à :
- faire varier le flux d'air (L1) produit en fonction d'un mode freinage du véhicule ferroviaire (10),
le flux d'air (L1) en mode freinage étant plus fort qu'en mode conduite, et
dans lequel, en mode freinage, au moins l'un d'un frein mécanique et d'un frein électrodynamique est activé et le flux d'air (L1) est produit conformément à une force de freinage de ce(s) frein(s).

2. Procédé selon la revendication 1, dans lequel, en mode freinage, un frein électrodynamique (26) est activé dont la force de freinage est sélectionnée au moins proportionnellement en fonction d'une demande énergétique du dispositif d'aspiration d'air (23, 22, 25) pour produire un flux d'air (L1) prédéfini.

3. Procédé selon l'une quelconque des revendications précédentes, comprenant, lorsque le dispositif d'aspiration d'air (23, 22, 25) a été inactif dans un mode conduite, l'étape consistant à :
- activer le dispositif d'aspiration d'air (23, 22, 25) lors d'un passage du mode conduite au mode freinage.

4. Procédé selon l'une quelconque des revendications précédentes, dans lequel le dispositif d'aspiration d'air (23, 22, 25) est un élément parmi :
- un ventilateur (23, 22), par exemple pour le refroidissement de moteurs de traction (16) ou d'une électronique de puissance ;
- un système de climatisation (25) ;
- un compresseur.

5. Procédé selon l'une quelconque des revendications précédentes, dans lequel le flux d'air (L1) est produit au-dessous d'une valeur limite, dépendant en particulier du lieu et/ou de la vitesse, à partir du dépassement de laquelle des émissions de bruit inacceptables se manifestent.

6. Procédé selon l'une quelconque des revendications précédentes, dans lequel le flux d'air (L1) est conduit le long d'un composant échangeur de chaleur (100) du dispositif, et en mode freinage, un échange de chaleur entre le composant (100) et le flux d'air (L1) est limité.

7. Procédé selon la revendication 6, dans lequel, afin de réduire l'échange de chaleur, un débit d'agent réfrigérant à travers le composant (100) est réduit, en particulier par la réduction d'une vitesse d'écoulement de l'agent réfrigérant à travers le composant (100) ou par l'ouverture d'une soupape de dérivation (102) en amont du composant (100).

8. Procédé selon l'une quelconque des revendications précédentes, dans lequel le dispositif d'aspiration d'air (23, 22, 25) est aménagé pour fournir une fonction primaire indépendante d'une production de force de freinage en mode freinage.

9. Procédé selon la revendication 8, dans lequel le flux d'air aspiré pouvant être produit du dispositif d'aspiration d'air (23, 22, 25) peut être limité à la fonction primaire proprement dite en tenant compte des effets négatifs possibles.

10. Procédé selon l'une quelconque des revendications précédentes, dans lequel le dispositif d'aspiration d'air (23, 22, 25) est aménagé pour renforcer en mode freinage un flux d'air aspiré en mode conduite.

11. Procédé selon l'une quelconque des revendications précédentes, dans lequel le dispositif d'aspiration d'air (23, 22, 25) est piloté pour produire le flux d'air.

12. Procédé selon la revendication 2, dans lequel, si un excédent énergétique est produit par le freinage électrodynamique, cette énergie est dissipée au moins partiellement au moyen du dispositif d'aspiration d'air (23, 22, 25) .

13. Véhicule ferroviaire (10), comprenant :
- au moins un dispositif d'aspiration d'air (23, 22, 25) qui est aménagé pour produire un flux d'air (L1) par aspiration de l'air ambiant ; et
- un dispositif de commande (28) ;
le dispositif de commande (28) étant aménagé pour piloter le dispositif d'aspiration d'air (23, 22, 25) de telle sorte que le flux d'air (L1) produit est variable en fonction d'un mode freinage du véhicule ferroviaire (10) ,
le flux d'air (L1) en mode freinage étant plus fort qu'en mode conduite, et en mode freinage, au moins l'un d'un frein mécanique et d'un frein électrodynamique est activé et le flux d'air (L1) est produit conformément à une force de freinage de ce(s) frein(s).
